# EUROPÄISCHE PATENTANMELDUNG

(11) **EP 2 692 814 A1**
(43) Veröffentlichungstag der Anmeldung: **05.02.2014**
(21) Anmeldenummer: 12178931.7
(22) Anmeldetag: 02.08.2012
(51) Int. Cl.: C09K 3/14, B24D 3/14, C04B 35/111

(54) **Schleifkorn, enthaltend eine erste Fläche ohne Ecke und zweite Fläche mit Ecke**

(71) Anmelder: ROBERT BOSCH GMBH, 70442 Stuttgart (DE)
(72) Erfinder: Hejtmann, Georg, 74395 Mundelsheim (DE); Lindemann, Gert, 72805 Lichtenstein (DE); Pleschinger, Tony, 70439 Stuttgart (DE); Stedile, Petra, 73732 Esslingen (DE); Fuenfschilling, Stefan, 78337 Öhningen (DE); Jenni, Adrian, 9000 St. Gallen (CH)

(57) **Zusammenfassung**

Die Erfindung betrifft einerseits ein Schleifkorn (110) mit einer Oberfläche, die mindestens eine erste Fläche (120) mit einer ersten Aussenkontur (121) und mindestens eine zweite Fläche (125) mit einer zweiten Aussenkontur (126) aufweist. Die erste Aussenkontur (121) enthält keine Ecke, aber die zweite Aussenkontur (126) enthält mindestens eine Ecke (127). Das Schleifkorn (110) kann ein keramisches Material enthalten, insbesondere polykristallines α-Al₂O₃. Zudem sind Gesamtheiten von Schleifkörnern (110), Verfahren zum Herstellen von Schleifkörnern (110), Giessformen, Schleifartikel, Verfahren zum Herstellen von Schleifartikeln und Verfahren zum Schleifen einer Oberfläche offenbart.

## Beschreibung

Die vorliegende Erfindung betrifft Schleifkörner mit definierter Form, Gesamtheiten von Schleifkörnern, Verfahren zum Herstellen von Schleifkörnern, Giesswerkzeuge, Schleifartikel mit Schleifkörnern, Verfahren zum Herstellen von Schleifartikeln sowie Verfahren zum Schleifen einer Oberfläche mit einem Schleifartikel.

Schleifkörner, insbesondere keramische Schleifkörner, mit definierter Form und Grösse sind seit einiger Zeit bekannt.

Die US 5,201,916 offenbart unter anderem flache Schleifkörner mit beispielsweise dreieckiger, rechteckiger oder kreisförmiger Form. Diese Schleifkörner werden aus einer Dispersion hergestellt, die in α-Aluminiumoxid konvertierbare Partikel und eine Flüssigkeit mit einer flüchtigen Komponente enthält. Die Dispersion wird in eine Giessform gegossen, die eine ebene Grundfläche und Vertiefungen aufweist, deren Formen komplementär zur gewünschten Formen der Schleifkörner sind. Anschliessend wird ein Teil der flüchtigen Komponente entfernt, so dass ein Vorprodukt mit der gewünschten Form entsteht. Das Vorprodukt wird dann aus der Giessform entnommen, kalziniert und schliesslich gesintert, so dass das fertige Schleifkorn entsteht.

Die mit diesem Verfahren hergestellten Schleifkörner weisen zwei gegenüberliegende Grundflächen auf, die im Wesentlichen die gleiche geometrische Form haben. Den Schleifkörnern wird eine längere Lebensdauer zugewiesen, da von den Schleifkörnern während des Schleifens ständig kleine Stücke abbrechen, so dass sich neue Schneideflächen ergeben. Die Schleifkörner schärfen sich hierdurch selbst. Von Schleifkörnern mit einer Grundfläche in Form eines Dreiecks, insbesondere eines gleichseitigen Dreiecks, wird vermutet, dass sich beim elektrostatischen Streuen etwa ein bis zwei Drittel so orientieren, dass eine Spitze von der Unterlagen weg weist, während sich weitere Schleifkörner so orientieren, dass die Spitze auf die Unterlage zu weist.

In einem in EP 615 816 beschriebenen alternativen Verfahren werden mittels Extrusion zunächst längliche, stangenförmige Vorprodukte erzeugt, die anschliessend in einzelne Schleifkörner zerteilt werden. Die stangenförmigen Schleifkörner können somit beispielsweise eine Zylinder- oder Prismenform aufweisen.

In der WO 2009/085841 wird ein weiteres Herstellungsverfahren beschrieben, bei dem das Vorprodukt in der Giessform unter Bedingungen getrocknet wird, die zum Brechen des Vorprodukts führen. Die Bruchstücke weisen zumindest teilweise Oberflächen und Kanten auf, die komplementär zu den entsprechenden Oberflächen und Kanten der Giessform sind und daher den durch die Giessform definierten Winkel aufweisen. Diese Oberflächen und Kanten liefern eine erhöhte Schneidfähigkeit. Die weiteren, durch das Brechen entstandenen Oberflächen und Kanten sind hingegen unregelmässig.

Die WO 2010/077495 offenbart Schleifkörner, die eine durchgehende oder eine nicht durchgehende Öffnung enthalten oder eine schalenartige Form aufweisen. Auch Herstellungsverfahren für derartige Schleifkörner sind dort beschrieben. Weitere Schleifkörner mit undefinierten Öffnungen sind in der WO 2010/077518 offenbart. Die WO 2010/077491 befasst sich ebenfalls mit Schleifkörnern mit einer schalenartigen Form.

Aus der WO 2010/077519 sind Schleifkörner bekannt, die zwei gegenüberliegende Hauptflächen und dazwischen verlaufende, zu den Hauptflächen geneigte Seitenflächen aufweisen. Die verschiedenen Seitenflächen eines Schleifkorns können unter verschiedenen Winkeln relativ zu den Hauptflächen geneigt sein.

Das Dokument WO 2011/068724 zeigt ebenfalls Schleifkörner, welche eine Grundseite und eine Spitze sowie dazwischen verlaufende geneigte Seitenflächen aufweisen. Ähnliche Schleifkornformen sind auch in der WO 2011/109188 beschrieben.

Das Dokument WO 2010/077509 befasst sich mit Schleifkörnern, die eine Oberfläche mit einer Vielzahl von Furchen aufweisen. Diese Furchen werden mit Hilfe von komplementären Graten an der Unterseite der Giessform erzeugt.

Die WO 2011/068714 zeigt pyramidenförmige Schleifkörner mit einer parallelogrammförmigen, insbesondere rhombischen, einer drachenförmigen und einer superelliptischen Grundfläche.

Die WO 2011/139562 offenbart Schleifkörner in Form von Tetraedern und Abwandlungen davon. Beispielsweise können die Seitenflächen konkav oder konvex ausgebildet sein, die Ecken des Tetraeders können abgestumpft sein, oder die Kanten können kurvenförmig sein.

Die in WO 2012/018903 beschriebenen Schleifkörner enthalten zwei oder mehr plattenförmige Abschnitte, welche unter einem Winkel zueinander angeordnet sind.

Bei dem in WO 2012/061016 beschriebenen Verfahren wird zunächst ein abrasives Gebilde hergestellt, welches Schleifkornvorprodukte enthält, die über zerbrechliche Stege miteinander verbunden sind. Nach dem Sintern werden die Schleifkörner voneinander getrennt, indem die Stege durchbrochen werden.

Alternativ können Schleifkörner definierter Form auch mit einem Siebdruckverfahren hergestellt werden. Dies beschreibt beispielsweise die WO 96/12776. Dabei wird eine dimensionsstabile Dispersion durch Öffnungen mit definierter Form auf ein Transportband geleitet und anschliessend gehärtet. Die Öffnungen können beispielsweise in einem beweglichen Endlosband enthalten sein.

Eine Weiterentwicklung des Siebdruckverfahrens ist in der WO 2011/087649 offenbart. Bei diesem Verfahren wird die Dispersion mit Hilfe eines Differenzdrucks durch die Öffnungen des Endlosbandes hindurchgedrückt. Bei geeigneter Wahl der Viskosität der Dispersion können mit diesem Verfahren Schleifkörner hergestellt werden, deren Querschnitt sich von einer ersten Hauptseite zu einer zweiten gegenüberliegenden Hauptseite verjüngt.

In der WO 2012/061033 werden Verfahren zum Herstellen von Schleifkörnern definierter Form mit Hilfe von Laserstrahlung beschrieben. Zudem sind weitere spezielle Formen von Schleifkörnern offenbart. Beispielsweise können die Schleifkörner ein Hauptelement und mindestens drei sich davon erstreckende, stangenförmige Elemente enthalten. Insbesondere kann das Schleifkorn die Form eines Kreuzes, eines Grossbuchstaben "T", eines Sternes oder eines griechischen Kleinbuchstaben "λ" haben.

Allgemein wird davon ausgegangen, dass Schleifkörner mit definierter Form in mehrerlei Hinsicht verbesserte Eigenschaften aufweisen: Haben die Schleifkörner bereits zum Beginn ihrer Herstellung eine definierte Form und Grösse, so entfällt ein anschliessender Sortierschritt, mit dem die Schleifkörner ansonsten in verschiedene Grössenfraktionen aufgeteilt werden müssten. Zudem bleiben die Formen und Grössen auch zwischen verschiedenen Produktionschargen nahezu unverändert, was die Schleifeigenschaften sehr gut reproduzierbar macht. Des Weiteren können die Schleifkörner beispielsweise einen erhöhten Gesamtabtrag leisten, eine längere Lebensdauer haben, eine gesteigerte Oberflächengüte der bearbeiteten Oberfläche erzeugen oder ein besser reproduzierbares Schleifergebnis liefern.

Dennoch weisen die aus dem Stand der Technik bekannten Schleifkörner eine Reihe von Nachteilen auf. Beispielsweise lassen sich viele der bekannten Schleifkörner nicht sehr platzsparend auf einer Schleifmittel-Unterlage anordnen. Zudem lassen sich viele der bekannten Schleifkörner nicht ausreichend in einem auf einer Schleifmittel-Unterlage aufgetragenen Bindemittel verankern.

Es ist daher eine Aufgabe der vorliegenden Erfindung, die Nachteile des Standes der Technik zumindest teilweise zu beheben. Insbesondere soll also ein Schleifkorn bereitgestellt werden, welches derart ausgebildet ist, dass sich eine Vielzahl solcher Schleifkörner platzsparender auf einer Schleifmittel-Unterlage anordnen lässt. Zudem sollte das Schleifkorn derart ausgebildet sein, dass es möglichst sicher in einem auf einer Schleifmittel-Unterlage aufgetragenen Grundbinder verankert werden kann. In vorteilhaften Ausgestaltungen sollte das Schleifkorn gleichzeitig derart beschaffen sein, dass eine verbesserte Spanbildung und/oder ein erhöhter Materialabtrag erreicht werden können. Zudem sollte das Schleifkorn in bevorzugten Ausführungsformen derart ausgestaltet sein, dass es sich auch mit Hilfe einer mechanischen Streuung mit möglichst hoher Wahrscheinlichkeit in einer vorteilhaften Orientierung auf einer Unterlage anordnen lässt. Eine vorteilhafte Orientierung liegt beispielsweise dann vor, wenn Ecken und/oder Kanten des Schleifkorns von der Unterlage weg weisen und daher auf eine zu bearbeitende Oberfläche hin weisen.

Diese Aufgabe wird gelöst durch ein Schleifkorn, welches eine Oberfläche mit mindestens einer ersten Fläche und mindestens einer zweiten Fläche aufweist. Die erste Fläche weist eine erste Aussenkontur auf, welche die erste Fläche begrenzt; die zweite Fläche weist eine zweite Aussenkontur auf, welche die zweite Fläche begrenzt. Erfindungsgemäss enthält die erste Aussenkontur keine Ecke, während die zweite Aussenkontur aber mindestens eine Ecke enthält.

Hier und im Folgenden wird unter einer Fläche ein zusammenhängender zweidimensionaler Teil der Oberfläche des Schleifkorns verstanden, der aus Punkten besteht, an denen jeweils eine wohldefinierte, gedachte Tangentialebene an das Schleifkorn angelegt werden kann. Eine solche Fläche kann eben oder gewölbt sein, insbesondere konkav gewölbt oder konvex gewölbt. Sie kann auch mindestens einen ebenen Abschnitt und mindestens einen gewölbten Abschnitt aufweisen, wobei diese Abschnitte ohne dazwischen liegende Kante ineinander übergehen.

Eine Ecke an der zweiten Aussenkontur wird hier und im Folgenden als ein Punkt der zweiten Aussenkontur verstanden, an dem die Richtung der Tangenten an der zweiten Aussenkontur unstetig verläuft. Die erste Aussenkontur enthält erfindungsgemäss keine Ecke. Dies bedeutet also, dass die Richtung der an den Punkten der ersten Aussenkontur anlegbaren Tangenten entlang der gesamten ersten Aussenkontur stetig verläuft. Die erste Aussenkontur kann mindestens einen geradlinigen Abschnitt und/oder mindestens einen gekrümmten Abschnitt enthalten, insbesondere mindestens einen konvex gekrümmten Abschnitt und/oder mindestens einen konkav gekrümmten Abschnitt. An den Punkten, an denen benachbarte Abschnitte einander berühren, soll die Richtung der Tangenten jedoch stetig verlaufen. Beispielsweise kann die erste Fläche kreisförmig oder ellipsenförmig sein.

Die zweite Aussenkontur enthält mindestens eine wie oben definierte Ecke. Auch die zweite Aussenkontur kann mindestens einen geradlinigen Abschnitt und/oder mindestens einen gekrümmten Abschnitt enthalten, insbesondere mindestens einen konvex gekrümmten Abschnitt und/oder mindestens einen konkav gekrümmten Abschnitt.

Wenn ein derartiges erfindungsgemässes Schleifkorn mit der ersten Fläche auf einer Schleifmittel-Unterlage aufliegt und insbesondere die erste Fläche in einem dort aufgetragenen Grundbinder eingebettet ist, so ist das Schleifkorn besonders sicher verankert. Es sind dann nämlich dort keine Ecken des Schleifkorns vorhanden, die ansonsten bei der Bearbeitung einer Oberfläche Risse im Grundbinder erzeugen könnten, was zu einem Ausbruch des Schleifkorns führen könnte. Zudem können sich Schleifkörner mit Ecken an der ersten Aussenkontur gegenseitig behindern, wenn sie beim Streuen auf einer Schleifmittel-Unterlage benachbart angeordnet werden. Aufgrund der nicht vorhandenen Ecken an der ersten Aussenkontur können die Schleifkörner somit in vielen Fällen in einer grösseren Dichte auf einer Unterlage platziert werden. Die Ecken der zweiten Aussenkontur, die von der ersten Aussenkontur und daher auch von der Unterlage und dem Grundbinder beabstandet sind und insbesondere davon weg weisen, können hingegen für eine Schleifwirkung sorgen.

Die erste Fläche ist bevorzugt im Wesentlichen eben. Dies erlaubt eine besonders sichere Fixierung an einer Schleifmittel-Unterlage, wenn das Schleifkorn mit der ersten Fläche auf dieser Unterlage zu liegen kommt.

Alternativ oder zusätzlich kann die zweite Fläche im Wesentlichen eben sein.

Zweckmässigerweise liegen die erste Fläche und die zweite Fläche einander gegenüber und sind unter einem Winkel zueinander angeordnet, der kleiner als 30°, bevorzugt kleiner als 20°, weiter bevorzugt kleiner als 10° und besonders bevorzugt 0° ist. Insbesondere wenn die erste Fläche und die zweite Fläche eben sind, ist es vorteilhaft, wenn das Schleifkorn vollständig zwischen den beiden Ebenen verläuft, die durch die erste Fläche und die zweite Fläche definiert werden.

Wenn ein wie oben genannter Winkel zwischen der ersten Fläche und der zweiten Fläche gebildet ist, insbesondere ein Winkel von 0°, und das Schleifkorn mit seiner ersten Fläche auf einer Schleifmittel-Unterlage aufliegt, so verläuft auch die zweite Fläche unter dem genannten Winkel zu dieser Unterlage, insbesondere also parallel zu der Unterlage. Hierdurch kann eine wohldefinierte Schleifwirkung erzielt werden.

In geometrisch einfachen Ausführungsformen ist die zweite Fläche durch ein Polygon gebildet. Die Ecken des Polygons bilden dann die Ecken der zweiten Aussenkontur. Sowohl diese Ecken als auch die dazwischen verlaufenden Kanten sorgen für eine verbesserte Spanwirkung und erhöhen den Materialabtrag von einer bearbeiteten Oberfläche. Das Polygon kann konvex sein oder alternativ mindestens eine überstumpfe Ecke aufweisen. Es kann beispielsweise ein Dreieck, insbesondere ein gleichschenkliges oder sogar ein gleichseitiges Dreieck, ein Viereck, insbesondere ein Parallelogramm oder sogar ein Rechteck oder sogar ein Quadrat, ein insbesondere reguläres Fünfeck oder ein insbesondere reguläres Sechseck sein. Regelmässige Polygone sind bevorzugt, da sie eine hohe Symmetrie aufweisen, was zu gleichmässigen Schleifeigenschaften führt.

In vorteilhaften Ausgestaltungen liegt die senkrechte Projektion der zweiten Fläche auf die erste Fläche vollständig im Inneren der konvexen Hülle der ersten Fläche. Diese konvexe Hülle ist die kleinste konvexe Fläche, die die erste Fläche enthält. Bevorzugt liegt die genannte Projektion sogar im Inneren der ersten Fläche selbst. Hierdurch ist das Schleifkorn besonders stabil gegenüber den beim Schleifen auftretenden Kippkräften, wenn es mit der ersten Fläche auf einer Schleifmittel-Unterlage aufliegt.

Besonders bevorzugt verjüngt sich das Schleifkorn entlang einer sich von der ersten Fläche senkrecht erstreckenden Richtung. Dies bedeutet also, dass die senkrechte Projektion jeder parallel zur ersten Fläche und in einem ersten Abstand von dieser verlaufenden ersten Querschnittsfläche vollständig im Inneren jeder parallel zur ersten Fläche und in einem zweiten, kleineren Abstand von dieser verlaufenden zweiten Querschnittsfläche liegt. Hierdurch kann eine besonders gute Verankerung in einem auf einer Unterlage aufgetragenen Grundbinder erzielt werden, da das Schleifkorn eine Art von "Standfuss" aufweist. Zudem führt dies dazu, dass das Schleifkorn auch mit Hilfe einer mechanischen Streuung mit hoher Wahrscheinlichkeit mit der ersten Fläche auf der Unterlage zu liegen kommt.

Zwischen der ersten Fläche und der zweiten Fläche kann eine Mantelfläche gebildet sein. Es ist günstig, wenn die Schnittlinien der Mantelfläche mit mindestens einer senkrecht zur ersten Fläche und senkrecht zur zweiten Fläche verlaufenden Schnittebene zumindest teilweise konkav sind. Hierdurch entsteht in vielen Ausführungsbeispielen ebenfalls eine Art von "Standfuss", der eine verbesserte Verankerung in einem Grundbinder erlaubt. Vorteilhafterweise gilt die genannte Eigenschaft für jede senkrecht zur ersten Fläche und senkrecht zur zweiten Fläche verlaufende Schnittebene. Ebenfalls vorteilhaft ist es, wenn die Schnittlinien vollständig konkav sind. Zudem ist es zweckmässig, wenn die Schnittlinien strikt konkav sind.

Die Form und die Grösse des Schleifkorns können etwa mit Hilfe eines Mikroskops bestimmt werden. Das erfindungsgemässe Schleifkorn kann eine Grösse im gesamten Grössenbereich aufweisen, der auch für herkömmliche Schleifkörner üblich ist. Üblicherweise führen Schleifkörner mit grösseren Grössen zu einem höheren Materialabtrag von einer bearbeiteten Oberfläche als kleinere Schleifkörner. Beispielsweise kann das Schleifkorn eine Grösse im Bereich von 100 µm bis 2000 µm haben. Diese Grösse kann experimentell mit Hilfe eines Mikroskops bestimmt werden. Sie wird verstanden als der Durchmesser eines Hüllkreises der ersten Fläche, also als der kleinste Durchmesser eines Kreises, der die erste Fläche umschliesst. Weist das Schleifkorn mehrere erste Flächen ohne Ecke auf, so ist die Grösse des Schleifkorns der grösste der Durchmesser all dieser Flächen.

Bei der oben beschriebenen Form des Schleifkorns handelt es sich um eine Idealisierung. Die Erfindung umfasst jedoch auch Schleifkörner, welche im Rahmen der Herstellungstoleranzen von dieser idealisierten Form abweichen. Mögliche Abweichungen von der idealisierten Form können eine oder mehrere der folgenden Ursachen haben:
- Hohlräume oder Bläschen aufgrund eingeschlossener Luft und/oder anderer Gase in einer Dispersion, aus der die Schleifkörner hergestellt werden;
- fehlende Ecken und/oder Kanten, welche durch ein nicht komplettes Ausfüllen einer Giessform und/oder während eines Entfernens eines Vorprodukts des Schleifkorns aus einer Giessform entstehen;
- eingefallene Seitenflächen und/oder Kanten, die durch ein Schrumpfen während des Entfernens eines Teiles der flüchtigen Komponenten der Dispersion entstehen; insbesondere eingefallene Flächen, die aus der oberen freien, nicht in Kontakt mit der Giessform stehenden Fläche der Dispersion entstehen;
- Abplatzungen, welche durch einen Trocken- und/oder einen Sinterprozess hervorgerufen werden;
- abgebrochene Ecken und/oder Kanten, welche durch einen Transport und/oder während einer Weiterverarbeitung der Schleifkörner als Schüttgut entstehen.

Die Abweichungen von der Idealisierung müssen nicht zwangsläufig zu nachteiligen Eigenschaften des Schleifkorns führen. Beispielsweise können abgebrochene Ecke und/oder Kanten auch bewirken, dass gegenüber der Idealisierung weitere Schneidkanten entstehen, die die Schleifwirkung sogar positiv beeinflussen können.

Insbesondere umfasst die Erfindung auch Schleifkörner, deren Form nur im Wesentlichen mit der idealisierten Form übereinstimmt. Beispielsweise werden die erste oder die zweite Fläche als im Wesentlichen eben verstanden, wenn sie gewölbt sind und Krümmungsradien aufweisen, die mindestens das Doppelte, bevorzugt mindestens das Fünffache, besonders bevorzugt mindestens das Zehnfache der oben definierten Grösse des Schleifkorns betragen. Des Weiteren wird ein Punkt der zweiten Aussenkontur als Ecke angesehen, wenn dort eigentlich eine Krümmung vorliegt, deren Krümmung jedoch höchstens 10 %, bevorzugt höchstens 5 %, besonders bevorzugt höchstens 2 % der Grösse des Schleifkorns beträgt. Ebenso werden Abschnitte der ersten oder der zweiten Aussenkontur als geradlinig angesehen, wenn sie zumindest teilweise oder sogar vollständig kurvenförmig sind und einen Krümmungsradius aufweisen, der mindestens das Doppelte, bevorzugt mindestens das Fünffache, besonders bevorzugt mindestens das Zehnfache der Grösse des Schleifkorns beträgt. Insbesondere wird auch eine Aussenkontur aus Polygon angesehen, wenn sie aus solchen im Wesentlichen geradlinigen Abschnitten und Ecken zusammengesetzt ist.

Bevorzugt weist das Schleifkorn aber eine wie oben beschriebene idealisierte Form auf.

Das Schleifkorn kann beispielsweise ein keramisches Material, insbesondere ein polykristallines keramisches Material, enthalten oder daraus bestehen. Bevorzugt enthält das Schleifkorn Aluminiumoxid, besonders bevorzugt α-Al₂O₃.

Alternativ oder zusätzlich kann das Schleifkorn auch noch mindestens ein weiteres Metalloxid enthalten, wie etwa Natriumoxid, Magnesiumoxid, Eisenoxid, Siliziumoxid, Kalziumoxid, Zirkonoxid, Yttriumoxid, Zinkoxid, Kobaltoxid, Nickeloxid, Hafniumoxid, Chromoxid, Praseodymoxid, Samariumoxid, Ytterbiumoxid, Neodymoxid, Lanthanoxid, Gadoliniumoxid, Ceroxid, Dysprosiumoxid, Erbiumoxid, Lutetiumoxid, Titanoxid, Manganoxid oder beliebige Kombinationen davon.

Viele dieser Metalloxide stammen von Verunreinigungen in den Ausgangsrohstoffen, wie beispielsweise in Aluminiumoxid. Bei ausreichend geringen Anteilen im Schleifkorn haben solche Verunreinigungen jedoch keinen negativen Einfluss auf die Herstellung und die Anwendung des Schleifkorns. Einige der genannten Verunreinigungen können sogar einen positiven Effekt auf das Schleifkorn haben.

Anteile von Zirkonoxid oder Yttriumoxid können beispielsweise von Mahlkugeln stammen, die in einem Mahlschritt bei der Herstellung der Schleifkörner verwendet werden können. Anteile von Eisenoxid können aus einem Mahlbehälter stammen, der bei einem solchen Mahlschritt verwendet wird.

Ebenfalls alternativ oder zusätzlich kann das Schleifkorn weitere Hartstoffe enthalten, wie beispielsweise Siliziumkarbid.

Weiterhin kann das Schleifkorn mindestens ein Zersetzungsprodukt eines unten näher beschriebenen Dispergators enthalten, der bei der Herstellung der Schleifkörner verwendet wurde. Ferner kann das Schleifkorn mindestens einen Keimbildner oder dessen Zersetzungsprodukt enthalten, welches bei der Herstellung der Schleifkörner verwendet wurde. Bei dem Keimbildner kann es sich beispielsweise um das oben bereits erwähnte Magnesiumoxid handeln. Zudem kann das Schleifkorn auch mindestens einen der weiteren in der EP 615 816 Al beschriebenen Stoffe enthalten.

Die genannten Inhaltsstoffe können mit Hilfe von an sich bekannten chemischen Analyseverfahren bestimmt werden.

Das Schleifkorn kann ein Gefüge mit einer oder mehreren verschiedenen Phasen enthalten oder daraus bestehen. Dabei kann eine erste Phase aus Aluminiumoxid, besonders bevorzugt aus α-Al₂O₃ bestehen. Eine zweite Phase kann aus einem oder mehreren der oben genannten weiteren Metalloxide und/oder weiteren Hartstoffe bestehen.

Der Anteil an Aluminiumoxid, insbesondere an α-Al₂O₃, im Schleifkorn kann beispielsweise mindestens 25 Gew.-%, bevorzugt mindestens 50 Gew.-%, weiter bevorzugt mindestens 70 Gew.-%, besonders bevorzugt mindestens 95 Gew.-% betragen.

Das Schleifkorn kann eine Beschichtung aufweisen, welche nur einen Teil der Oberfläche bedeckt, insbesondere nur eine oder mehrere Kanten und/oder nur einen von mehreren flächigen Bereichen der Oberfläche. Bei der Beschichtung kann es sich etwa um eine ferromagnetische oder eine paramagnetische Beschichtung handeln. Eine solche teilweise Beschichtung der Oberfläche mit einem ferromagnetischen oder einem paramagnetischen Material ermöglicht es, das Schleifkorn in einem während des Streuens angelegten Magnetfeld in einer vorgegebenen Richtung auszurichten. Alternativ kann es sich auch um eine Beschichtung aus einem Material mit einer erhöhten Wärmeleitfähigkeit handeln oder um eine Beschichtung, welche eine erhöhte Adhäsion des Schleifkorns auf der Schleifmittel-Unterlage ermöglicht.

Ein weiterer Aspekt der Erfindung betrifft eine Gesamtheit von Schleifkörnern. Unter einer Gesamtheit von Schleifkörnern wird hier und im Folgenden eine zusammengehörige Ansammlung von Schleifkörnern verstanden. Beispielsweise kann es sich dabei um eine Ansammlung von Schleifkörnern handeln, die in einem Gebinde enthalten und so gelagert und/oder transportiert werden, beispielsweise in einem Sack.

Eine solche Ansammlung von Schleifkörner kann zur Herstellung eines Schleifartikels verwendet werden. Als Gesamtheit von Schleifkörnern wird auch die Gesamtheit aller in einem Schleifartikel vorhandenen Schleifkörner angesehen.

Bevorzugt enthält die Gesamtheit von Schleifkörnern mindestens 20 Gew.-%, bevorzugt mindestens 50 Gew.-%, besonders bevorzugt mindestens 90 Gew.-% erfindungsgemässe Schleifkörner, so wie sie oben beschrieben wurden. Die übrigen in der Gesamtheit enthalten Schleifkörner können ebenfalls eine definierte Form aufweisen, welche jedoch von der erfindungsgemässen Form abweicht, oder sie können keine definierte Form aufweisen, da es sich beispielsweise um gebrochene Schleifkörner handelt. Diese übrigen in der Gesamtheit enthalten Schleifkörner werden auch als "Stützkörner" bezeichnet.

Es ist denkbar und liegt im Rahmen der Erfindung, dass die in der Gesamtheit enthaltenen erfindungsgemässen Schleifkörner voneinander verschieden ausgebildet sind. So kann die Gesamtheit von Schleifkörnern beispielsweise einen ersten Anteil von Schleifkörnern einer ersten erfindungsgemässen Ausführungsform enthalten sowie einen zweiten Anteil von Schleifkörnern einer zweiten erfindungsgemässen Ausführungsform, die von der ersten erfindungsgemässen Ausführungsform verschieden ist. Insbesondere können sich die Schleifkörner der ersten erfindungsgemässen Ausführungsform in ihrer Grösse und/oder in ihrer Form von den Schleifkörnern der zweiten erfindungsgemässen Ausführungsform unterscheiden.

Die Gesamtheit von Schleifkörnern kann ausschliesslich aus identischen erfindungsgemässen Schleifkörnern bestehen; insbesondere hat die Gesamtheit dann eine punktförmige Grössenverteilung.

Die Gesamtheit von Schleifkörnern kann im Wesentlichen eine Grössenverteilung aufweisen, die einem in der Schleifmittelindustrie üblichen Grössenstandard entspricht, beispielsweise dem American National Standards Institute (ANSI), den Standards der Federation of European Producers of Abrasives (FEPA) oder dem Japanese Industrial Standard (JIS). Beispielsweise kann die Gesamtheit der Schleifkörner im Wesentlichen eine Körnung P12, P16, P20, P24, P30, P36, P40, P50, P60, P80, P100, P120, P150, P180, P220, P240, P280, P320, P360, P400, P500, P600, P800, P1000, P1200, P1500, P2000, P2500, P3000 oder P5000 gemäss dem FEPA-Standard aufweisen. Dabei bedeutet eine Grössenverteilung "im Wesentlichen", dass zumindest 90 Gew.-%, bevorzugt mindestens 95 Gew.-%, weiter bevorzugt mindestens 99 Gew.-% und besonders bevorzugt sämtliche Schleifkörner der Gesamtheit von Schleifkörnern diesen Standard erfüllen.

Wie oben bereits beschrieben wurde, ist es auch denkbar, dass die Gesamtheit mindestens zwei verschiedene Anteile erfindungsgemässer Schleifkörner und/oder mindestens einen Anteil nicht erfindungsgemässer Schleifkörner enthält. Jeder dieser Anteile kann für sich eine Grössenverteilung aufweisen, die jeweils einem der oben genannten, in der Schleifmittelindustrie üblichen Grössenstandards entspricht.

Ein erfindungsgemässes Schleifkorn oder eine erfindungsgemässe Gesamtheit von Schleifkörnern kann beispielsweise mit dem folgenden, aus US 5,201,916 bekannten Verfahren hergestellt werden:
a) Herstellung oder Bereitstellung einer Dispersion, enthaltend α-Aluminiumoxid-Partikel und/oder Partikel, welche in α-Aluminiumoxid umwandelbar sind, sowie mindestens ein flüchtiges Dispersionsmittel, bevorzugt Wasser;
b) Einfüllen der Dispersion in mindestens eine Vertiefung einer Giessform;
c) optional Abrakeln einer Oberseite der Giessform, um zumindest einen Teil der Dispersion zu entfernen, der über die Oberseite der Giessform übersteht;
d) Entfernen eines Teiles der flüchtigen Komponenten der Dispersion, so dass mindestens ein Schleifkorn-Vorprodukt entsteht;
e) Entfernen des Schleifkorn-Vorprodukts aus der Giessform;
f) optional Kalzinieren des Schleifkorn-Vorprodukts;
g) Sintern des Schleifkorn-Vorprodukts, um mindestens ein Schleifkorn zu erhalten.

Vor und/oder während der Herstellung der Dispersion im Schritt a) können die Rohstoffe, insbesondere α-Aluminiumoxid-Partikel und/oder Partikel, welche in α-Aluminiumoxid umwandelbar sind, gemahlen werden. Dies kann beispielsweise mit Hilfe einer Kugelmühle erfolgen, insbesondere mit Hilfe einer Planetenkugelmühle.

Die Dispersion kann mindestens einen Dispergator enthalten. Ein solcher Dispergator erleichtert die Bildung der Dispersion und erhöht ihre Stabilität, indem er beispielsweise Schichten um die einzelnen Körner herum bildet, die das Zusammenklumpen verhindern. Bei dem Dispergator kann es sich beispielsweise um ein Polymer handeln. In der Regel zersetzt sich der Dispergator spätestens während des Sinterns im Schritt g).

Zum Herstellen der erfindungsgemässen Schleifkörner kann ein Giesswerkzeug verwendet werden, wobei das Giesswerkzeug mindestens eine Giessform umfasst, die mindestens eine Vertiefung mit einer jeweiligen Oberfläche aufweist, wobei die Oberfläche komplementär zur Form zumindest eines Teils der Oberfläche des Schleifkorns ist.

Bevorzugt befindet sich eine Vielzahl von Vertiefungen in der Giessform, sodass mit einem Giessvorgang eine Vielzahl von Schleifkörnern gegossen werden kann.

In einer Weiterentwicklung des aus US 5,201,916 bekannten Verfahrens kann die oben genannte Giessform nur ein Teil eines mehrteiligen Giesswerkzeugs sein, welches zusätzlich mindestens ein Formelement, insbesondere eine weitere Giessform oder ein Stempelelement, umfasst, mit welchem ergänzend zu der in der ersten Giessform geformten Oberfläche zumindest ein Teil der restlichen Oberfläche des Schleifkorns formbar ist. Dies ist insbesondere dann sinnvoll, wenn das herzustellende Schleifkorn Hinterschneidungen aufweist.

Beispielsweise können Stempelelemente vorgesehen sein, die in die gefüllten Vertiefungen der ersten Giessform geführt werden. Alternativ ist es auch denkbar, dass im optionalen Schritt c) nicht die gesamte über die Oberseite der Giessform überstehende Dispersion abgerakelt wird, sondern stattdessen eine Schicht geeigneter Dicke über der Oberseite der Giessform stehen gelassen wird. Hierfür sollte die Dispersion im Schritt c) ausreichend formstabil sein. Beispielsweise kann im Schritt b) eine bereits ausreichend formstabile Dispersion eingefüllt werden oder die Dispersion zwischen den Schritten b) und c) in einen ausreichend formstabilen Zustand überführt werden. Die Stempelelemente müssen bei dieser Variante nicht zwingend in die Vertiefung eindringen; stattdessen kann mit Hilfe der Stempelelemente eine Formgebung in dem überstehenden Teil der Dispersion erfolgen.

Bevorzugt schliessen die Stempelelemente die Vertiefungen der Giessform nicht vollständig ab, so dass die flüchtige Komponente der Dispersion entweichen kann.

Kompliziertere Formen von Schleifkörnern sind in zusammensetzbaren Giessformen, ähnlich wie im Spritzgussverfahren, formbar. Dazu weist mindestens eine Giessform mindestens eine Einfüllöffnung auf, durch welche die Dispersion in die Vertiefungen gelangen kann.

Die Giessform und/oder das Stempelelement kann beispielsweise Silikon enthalten oder daraus bestehen. Die Vertiefungen können eine offene Deckfläche aufweisen, durch die die Dispersion eingefüllt werden kann. Die Vertiefungen der Giessform weisen jeweils eine Oberfläche auf, deren Form komplementär zur Form zumindest eines Teils der Oberfläche des gewünschten Schleifkorns ist. Bevorzugt weisen die Vertiefungen der Giessform jeweils eine Oberfläche auf, deren Form komplementär zur Form des Teils der Oberfläche des Schleifkorns ist, der nicht die erste Fläche des Schleifkorns bildet oder der nicht die zweite Fläche des Schleifkorns bildet. Die erste Fläche bzw. die zweite Fläche kann dann aus der oberen freien, nicht in Kontakt mit der Giessform stehenden Fläche der Dispersion entstehen. Aufgrund eines möglichen Schrumpfens der Dispersion während des Schritts d) ist es möglich, dass die erste Fläche bzw. die zweite Fläche nicht vollständig eben ist, sondern eine geringfügige Wölbung aufweist.

Das im Schritt d) entstehende Vorprodukt sollte bevorzugt mechanisch stabil genug sein, um in den nachfolgenden Schritten als Schüttgut weiterverarbeitet werden zu können. Das optionale Kalzinieren in Schritt f) ist insbesondere dann vorteilhaft oder sogar erforderlich, wenn die Dispersion mehrere verschiedene Rohstoffe enthält und eine Phasenumwandlung erforderlich ist.

Noch ein Aspekt der Erfindung betrifft einen Schleifartikel, welcher eine wie oben beschriebene Gesamtheit von Schleifkörnern enthält. Insbesondere können also mindestens 20 Gew.-%, bevorzugt mindestens 50 Gew.-%, besonders bevorzugt mindestens 90 Gew.-% aller Schleifkörner des Schleifartikels als erfindungsgemässe Schleifkörner ausgebildet sein, so wie sie oben beschrieben wurden. Die übrigen Schleifkörner können ebenfalls eine definierte Form aufweisen, welche jedoch von der erfindungsgemässen Form abweicht, oder sie können keine definierte Form aufweisen.

Bei dem Schleifartikel kann es sich beispielsweise um einen beschichteten Schleifartikel (englisch: "coated abrasive"), einen Vliesschleifartikel, um einen gebundenen Schleifartikel (englisch: "bonded abrasive") oder um eine Schleifbürste handeln.

Ein beschichteter Schleifartikel enthält eine insbesondere flexible Unterlage, wie beispielsweise Papier, Vulkanfiber, eine Folie, ein textiles Material, einen Schaumstoff oder mehrschichtige Kombinationen davon. Die Schleifkörner können mit Hilfe eines Grundbinders (englisch: "make coat") an der Unterlage befestigt sein. Der Grundbinder und die Schleifkörner können mit einem Deckbinder (englisch: "size coat") überdeckt sein. Optional kann oberhalb des genannten Deckbinders auch noch ein zweiter Deckbinder vorhanden sein (englisch: "supersize coat").

Als Grundbinder, Deckbinder und zweiter Deckbinder können sämtliche an sich bekannte Bindemittel eingesetzt werden, beispielsweise aus Kunstharz, wie etwa einem Phenolharz, einem Epoxid, einem Harnstoffharz, einem Melaminharz oder einem ungesättigten Polyesterharz. Der Deckbinder und/oder der zweite Deckbinder können zudem weitere übliche Wirkstoffe und/oder Füllstoffe enthalten.

Der Schleifartikel kann in unterschiedlichen Konfektionsformen vorliegen, beispielsweise als Schleifscheibe oder als Schleifband.

Die Erfindung umfasst auch ein Verfahren zum Herstellen eines wie oben beschriebenen erfindungsgemässen Schleifartikels. Das Verfahren enthält einen Schritt, in dem eine Gesamtheit von Schleifkörnern an und/oder in einem Substrat fixiert wird, insbesondere mittels eines Bindemittels. Bei dem Substrat kann es sich etwa um eine insbesondere flexible Unterlage eines beschichteten Schleifartikels, um ein Vliesmaterial eines Vliesschleifmittels, um eine Matrix eines gebundenen Schleifmittels oder um Borsten einer Schleifbürste handeln. Im Falle eines beschichteten Schleifartikels kann das Auftragen des Grundbinders und/oder der Schleifkörner und/oder des Deckbinders und/oder des zweiten Deckbinders mit einer an sich bekannten Methode erfolgen. Beispielsweise können die Schleifkörner elektrostatisch oder mechanisch (d. h. gravimetrisch) aufgetragen werden. Insbesondere bei den oben beschriebenen vorteilhaften Ausführungsformen wird auch beim mechanischen Streuen ein grosser Anteil der Schleifkörner so orientiert, dass die erste Fläche auf einer Unterlage zu liegen kommt. Auf eine aufwändigere elektrostatische Streuung kann also verzichtet werden.

Ferner richtet sich die Erfindung auch auf ein Verfahren zum Schleifen einer Oberfläche mit einem wie oben beschriebenen Schleifartikel. Bei der Oberfläche kann es sich insbesondere um eine lackierte Oberfläche handeln. Im Falle einer lackierten Oberfläche sind Schleifkörner mit Grössen von 500 µm oder weniger besonders geeignet.

Im Folgenden wird die Erfindung mit Hilfe mehrerer Ausführungsbeispiele und Zeichnungen näher erläutert. Dabei zeigen
Figuren 1a und b: eine erste Ausführungsform eines erfindungsgemässen Schleifkorns in zwei Ansichten;
Figuren 2a und b: eine zweite Ausführungsform eines erfindungsgemässen Schleifkorns in zwei Ansichten;
Figur 3: eine dritte Ausführungsform eines erfindungsgemässen Schleifkorns;
Figur 4: eine vierte Ausführungsform eines erfindungsgemässen Schleifkorns.

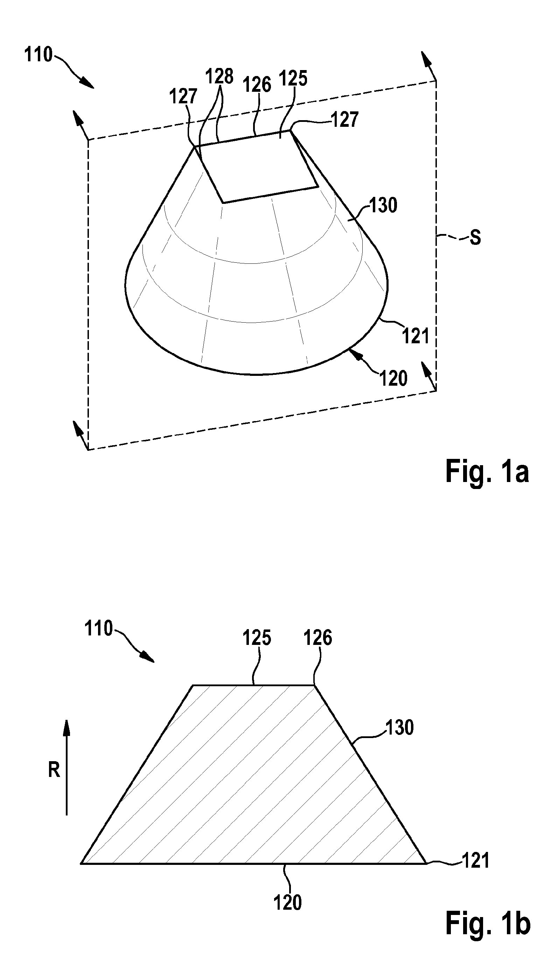

Das in Figur 1a in einer perspektivischen Ansicht dargestellte Schleifkorn 110 enthält eine ebene, kreisförmige erste Fläche 120 mit einer ersten Aussenkontur 121 und eine dazu parallele quadratische, also polygonale zweite Fläche 125 mit einer zweiten Aussenkontur 126. Zwischen der ersten Fläche 120 und der zweiten Fläche 125 ist eine gewölbte Mantelfläche 130 gebildet. Die auf der Mantelfläche 130 gezeichneten Linien deuten den gewölbten Verlauf der Mantelfläche 130 an; sie stellen jedoch keine tatsächlichen Kanten des Schleifkorns 110 dar. Das Schleifkorn 110 verläuft vollständig zwischen den beiden Ebenen, die durch die erste Fläche 120 und die zweite Fläche 125 definiert werden.

Die erste Aussenkontur 121 weist keine Ecke auf, da die Richtung der Tangenten an den Punkten der ersten Aussenkontur 121 stetig verläuft. Das Fehlen von Ecken in der ersten Aussenkontur 121 trägt zur sicheren Verankerung des Schleifkorns 110 in einem Grundbinder bei. Im Gegensatz zur ersten Aussenkontur 121 weist die zweite Aussenkontur 126 vier Ecken 127 auf. Sowohl diese Ecken 127 als auch die vier dazwischen verlaufenden Kanten 128 sorgen für eine Schleifwirkung.

Die senkrechte Projektion der zweiten Fläche 125 auf die erste Fläche 120 verläuft vollständig im Inneren der ersten Fläche 120, wie auch in Figur lb gut zu erkennen ist. Hierdurch ist das Schleifkorn 110 besonders stabil gegenüber den beim Schleifen auftretenden Kippkräften, wenn es mit der ersten Fläche 120 auf einer hier nicht dargestellten Schleifmittel-Unterlage aufliegt.

Figur 1b zeigt eine seitliche Schnittansicht durch die in Figur 1a dargestellte Schnittebene S. Diese Schnittebene S verläuft senkrecht zur ersten Fläche 120 und zur zweiten Fläche 125 und durch die Mittelpunkte dieser beiden Flächen 120, 125. Entlang der Richtung R, die sich von der ersten Fläche 120 senkrecht zur zweiten Fläche 125 erstreckt, verjüngt sich das Schleifkorn 110. Hierdurch kann eine besonders gute Verankerung in einem auf einer Unterlage aufgetragenen Grundbinder erzielt werden. Zudem kann das Schleifkorn 110 auch mit Hilfe einer mechanischen Streuung mit hoher Wahrscheinlichkeit mit der ersten Fläche 120 auf der Unterlage platziert werden. In dieser Orientierung weisen auch die Ecken 127 und die Kanten 128 von der Unterlage weg und können somit eine Schleifwirkung hervorrufen. Die Schnittlinie der Mantelfläche 130 mit dieser Schnittebene S verläuft geradlinig.

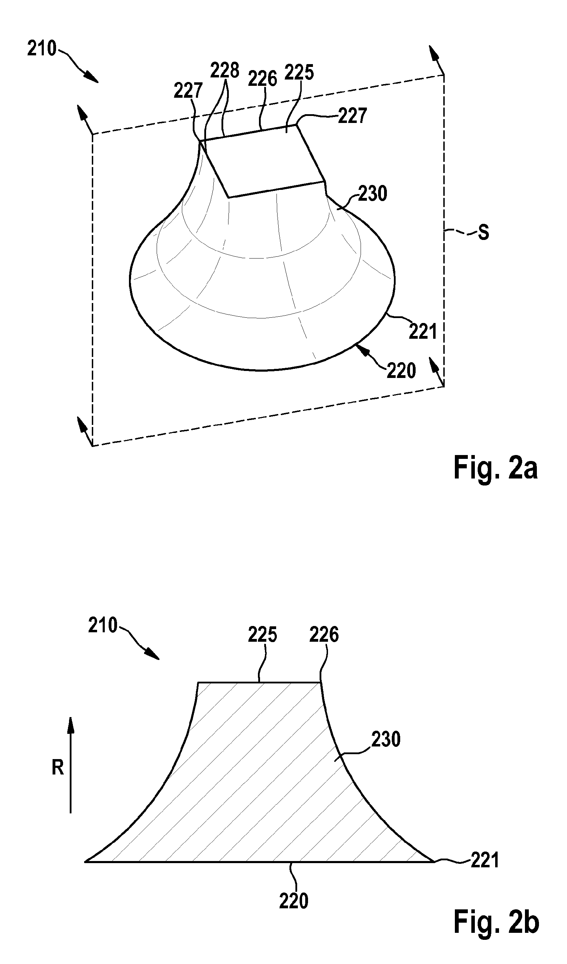

Eine weitere erfindungsgemässe Ausführungsform ist in den Figuren 2a und 2b dargestellt. Auch dieses Schleifkorn 210 weist eine ebene kreisförmige, erste Fläche 220 mit einer ersten Aussenkontur 221 und eine dazu parallele quadratische zweite Fläche 225 mit einer zweiten Aussenkontur 226 auf. Im Gegensatz zum Schleifkorn 110 gemäss den Figuren 1a und 1b ist die Schnittlinie der Mantelfläche 230 des Schleifkorns 210 mit einer Schnittebene S konvex, wie in Figur 2b zu sehen ist. Durch diese Konvexität entsteht im Bereich der ersten Fläche 220 eine Art von "Standfuss", mit dem das Schleifkorn 210 besonders stabil in einem Grundbinder verankert werden kann.

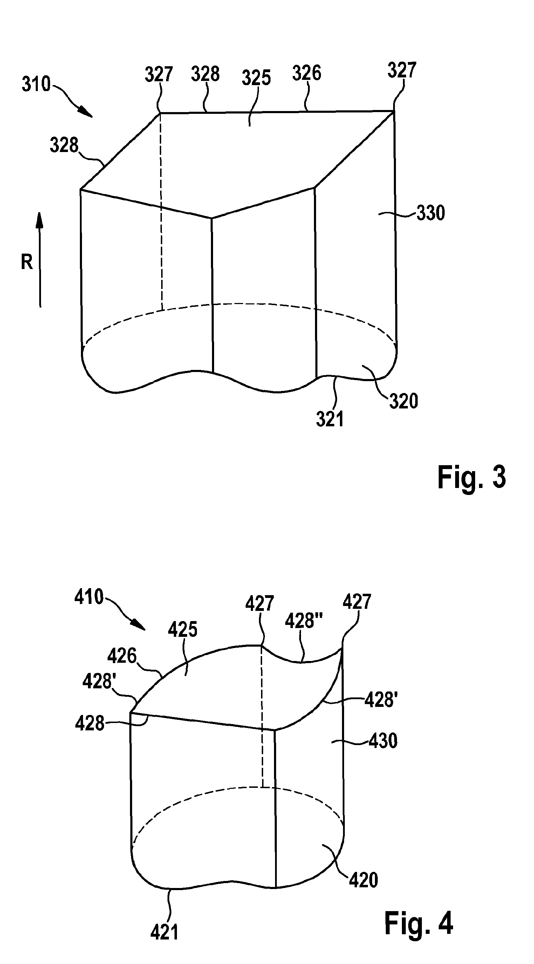

Das in Figur 3 gezeigte Schleifkorn 310 hat eine ebene erste Fläche 320 mit einer ersten Aussenkontur 321, die zwar nicht kreisförmig ist, aber ebenso keine Ecken aufweist. Die parallel dazu verlaufende gegenüberliegende zweite Fläche 325 hat die Form eines unregelmässigen Fünfecks mit fünf Ecken 327 und fünf dazwischen verlaufenden Kanten 328. Dieses Schleifkorn 310 verjüngt sich nicht in der sich von der ersten Fläche 320 senkrecht erstreckenden Richtung R.

Schliesslich hat auch das Schleifkorn 410 gemäss Figur 4 eine ebene erste Fläche 420 mit einer ersten Aussenkontur 421 und eine parallel dazu verlaufende zweite Fläche 425 mit einer zweiten Aussenkontur 426. Die zweite Aussenkontur 426 weist vier Kanten 428, 428', 428" auf. Von diesen Kanten ist die Kante 428 geradlinig; die Kanten 428' sind konvex gekrümmt; die Kante 428" ist konkav gekrümmt. Jeweils am Berührungspunkt zweier Kanten 428, 428', 428" ist eine Ecken 427 gebildet; an diesen Punkten verläuft nämlich die Richtung der Tangenten an der zweiten Aussenkontur 426 unstetig.

Die erfindungsgemässen Schleifkörner können beispielsweise mit einem im Folgenden beschriebenen Verfahren hergestellt werden: Zunächst wird eine Dispersion aus 200 g α-Al₂O₃, 0,4 g MgO, 90 g Wasser als Dispersionsmittel und 0,5 g Dispergator hergestellt. Das MgO fungiert dabei als Keimbildner. Als Dispergator kann beispielsweise das Produkt Dolapix CE64, erhältlich von Zschimmer & Schwarz, 56108 Lahnstein, Deutschland eingesetzt werden. Die somit erhaltene Dispersion wird für 30 Minuten bei 200 Umdrehungen pro Minute in einer Planetenkugelmühle gemahlen, beispielsweise einer Planetenkugelmühle PM400, erhältlich von der Retsch GmbH, 42781 Haan, Deutschland. Anschliessend wird die gemahlene Dispersion in eine Giessform aus Silikon eingefüllt, die Vertiefungen in der Form der gewünschten Schleifkörner enthält. Daraufhin wird die flüchtige Komponente, also das Wasser, aus der Dispersion entfernt. Hierdurch entsteht ein Schleifkorn-Vorprodukt, welches aus der Giessform entfernt wird. Die erste Fläche des Schleifkorns kann dann aus der oberen freien, nicht in Kontakt mit der Giessform stehenden Fläche der Dispersion entstehen. In einem abschliessenden Schritt wird das Vorprodukt als Schüttgut bei 1550 °C für 5 Minuten gesintert. Der Dispergator wird beim Sintern herausgebrannt.

Ein erfindungsgemässer Schleifartikel kann beispielsweise wie folgt hergestellt werden: Auf einer Unterlage aus Vulkanfiber mit einer Dicke von 0,8 mm wird eine Phenolharz-Dispersion als Grundbinder-Vorläufer in einer Menge von 120 g/m² aufgetragen. Anschliessend werden 600 g/m² der erfindungsgemässen Schleifkörner mittels elektrostatischer Streuung aufgetragen. Daraufhin wird der Grundbinder-Vorläufer zu einem Grundbinder gehärtet. Über dem Grundbinder und den Schleifkörnern wird eine Phenolharz-Dispersion in einer Menge von 800 g/m² als Deckbinder-Vorläufer aufgetragen, welche ebenfalls gehärtet wird.

## Patentansprüche

1. Schleifkorn (110; 210; 310; 410), aufweisend eine Oberfläche mit mindestens einer ersten Fläche (120; 220; 320; 420) mit einer ersten Aussenkontur (121; 221; 321; 421) und mindestens einer zweiten Fläche (125; 225; 325; 425) mit einer zweiten Aussenkontur (126; 226; 326; 426),
**dadurch gekennzeichnet, dass**
die erste Aussenkontur (121; 221; 321; 421) keine Ecke enthält und die zweite Aussenkontur (126; 226; 326; 426) mindestens eine Ecke (127; 227; 327; 427) enthält.

2. Schleifkorn (110; 210; 310; 410) gemäss Anspruch 1,
**dadurch gekennzeichnet, dass**
die erste Fläche (120; 220; 320; 420) im Wesentlichen eben ist.

3. Schleifkorn (110; 210; 310; 410) gemäss einem der vorangehenden Ansprüche,
**dadurch gekennzeichnet, dass**
die erste Fläche (120; 220; 320; 420) und die zweite Fläche (125; 225; 325; 425) einander gegenüberliegen und unter einem Winkel zueinander angeordnet sind, der kleiner als 30°, bevorzugt kleiner als 20°, weiter bevorzugt kleiner als 10° und besonders bevorzugt 0° ist.

4. Schleifkorn (110; 210; 310; 410) gemäss einem der vorangehenden Ansprüche,
**dadurch gekennzeichnet, dass**
das Schleifkorn (110; 210; 310; 410) vollständig zwischen den beiden Ebenen verläuft, die durch die erste Fläche (120; 220; 320; 420) und die zweite Fläche (125; 225; 325; 425) definiert werden.

5. Schleifkorn (110; 210; 310) gemäss einem der vorangehenden Ansprüche,
**dadurch gekennzeichnet, dass**
die zweite Fläche (125; 225; 325) durch ein Polygon gebildet ist.

6. Schleifkorn (110; 210) gemäss einem der vorangehenden Ansprüche,
**dadurch gekennzeichnet, dass**
die senkrechte Projektion der zweiten Fläche (125; 225) auf die erste Fläche (120; 220) vollständig im Inneren der konvexen Hülle der ersten Fläche (120; 220), insbesondere im Inneren der ersten Fläche (120; 220) liegt.

7. Schleifkorn (110; 210) gemäss Anspruch 6,
**dadurch gekennzeichnet, dass**
sich das Schleifkorn (110; 210) entlang einer sich von der ersten Fläche (120; 220) senkrecht erstreckenden Richtung (R) verjüngt.

8. Schleifkorn (210) gemäss einem der vorangehenden Ansprüche,
**dadurch gekennzeichnet, dass**
zwischen der ersten Fläche (220) und der zweiten Fläche (225) eine Mantelfläche (230) gebildet ist, wobei die Schnittlinien der Mantelfläche (230) mit mindestens einer senkrecht zur ersten Fläche (220) und senkrecht zur zweiten Fläche (225) verlaufenden Schnittebene (S), insbesondere mit jeder solchen Schnittebene (S), zumindest teilweise, bevorzugt vollständig, konkav, insbesondere strikt konkav sind.

9. Schleifkorn (110; 210; 310; 410) gemäss einem der vorangehenden Ansprüche,
**dadurch gekennzeichnet, dass**
es ein keramisches Material, insbesondere ein polykristallines keramisches Material, enthält oder daraus besteht, bevorzugt Aluminiumoxid, besonders bevorzugt α-Al₂O₃.

10. Gesamtheit von Schleifkörnern (110; 210; 310; 410),
**dadurch gekennzeichnet, dass**
sie mindestens 20 Gew.-%, bevorzugt mindestens 50 Gew.-%, besonders bevorzugt mindestens 90 Gew.-% Schleifkörner (110; 210; 310; 410) nach einem der vorangehenden Ansprüche enthält.

11. Verfahren zum Herstellen mindestens eines Schleifkorns (110; 210; 310; 410) oder einer Gesamtheit von Schleifkörnern (110; 210; 310; 410) gemäss einem der vorangehenden Ansprüche,
**gekennzeichnet durch** die folgenden Schritte:
a) Herstellung oder Bereitstellung einer Dispersion, enthaltend α-Aluminiumoxid-Partikel und/oder Partikel, welche in α-Aluminiumoxid umwandelbar sind, sowie mindestens ein flüchtiges Dispersionsmittel, bevorzugt Wasser;
b) Einfüllen der Dispersion in mindestens eine Vertiefung einer Giessform;
c) optional Abrakeln einer Oberseite der Giessform, um zumindest einen Teil der Dispersion zu entfernen, der über die Oberseite der Giessform übersteht;
d) Entfernen eines Teiles der flüchtigen Komponenten der Dispersion, so dass mindestens ein Schleifkorn-Vorprodukt entsteht;
e) Entfernen des Schleifkorn-Vorprodukts aus der Giessform;
f) optional Kalzinieren des Schleifkorn-Vorprodukts;
g) Sintern des Schleifkorn-Vorprodukts, um mindestens ein Schleifkorn (110; 210; 310; 410) zu erhalten.

12. Giesswerkzeug zum Herstellen mindestens eines Schleifkorns (110; 210; 310; 410) nach einem der Ansprüche 1 bis 9, wobei das Giesswerkzeug mindestens eine Giessform umfasst, die mindestens eine Vertiefung, bevorzugt eine Vielzahl von Vertiefungen, mit einer jeweiligen Oberfläche aufweist, wobei die Oberfläche komplementär zur Form zumindest eines Teils der Oberfläche des Schleifkorns (110; 210; 310; 410) ist.

13. Schleifartikel, enthaltend eine Gesamtheit von Schleifkörnern (110; 210; 310; 410) gemäss Anspruch 10.

14. Verfahren zum Herstellen eines Schleifartikels gemäss Anspruch 13, enthaltend einen Schritt, in dem eine Gesamtheit von Schleifkörnern (110; 210; 310; 410) gemäss Anspruch 10 an und/oder in einem Substrat fixiert wird, insbesondere mittels eines Bindemittels.

15. Verfahren zum Schleifen einer Oberfläche, insbesondere einer lackierten Oberfläche, mit einem Schleifartikel gemäss Anspruch 13.
